# EUROPÄISCHE PATENTSCHRIFT

(11) **EP 2 187 234 B1**
(45) Veröffentlichungstag und Bekanntmachung des Hinweises auf die Patenterteilung: **21.08.2013**
(21) Anmeldenummer: 09014201.9
(22) Anmeldetag: 13.11.2009
(51) Int. Cl.: G01S 13/02, G01S 13/88, H01Q 13/02, H01Q 1/22, F15B 15/28, H01Q 9/36, H01Q 9/40

(54) **Mikrowellenpositionsmesseinrichtung**
Microwave position measuring device
Dispositif de mesure de position de micro-ondes

(30) Priorität: 15.11.2008 DE 102008057505
(43) Veröffentlichungstag der Anmeldung: 19.05.2010
(73) Patentinhaber: FESTO AG & Co. KG, 73734 Esslingen (DE)
(72) Erfinder: Reininger, Thomas, Dr. rer. nat., 73249 Wernau (DE); Geisbusch, Lothar, Dr.-Ing., 73760 Ostfildern (DE); Maier, Marcus, Dr.-Ing., 73760 Ostfildern (DE)
(74) Vertreter: Vogler, Bernd

(56) Entgegenhaltungen:
- EP-A1- 1 752 791
- EP-A2- 1 189 305
- WO-A1-2005/060048
- WO-A1-2008/055590
- JP-A- 2003 309 419
- US-A1- 2004 239 339

## Beschreibung

Die Erfindung betrifft eine Mikrowellenpositionsmesseinrichtung mit einer Mikrowellen-Antennenanordnung zur Bestimmung einer Position eines in einem Bewegungsraum längs einer Bewegungsachse beweglichen Messobjekts anhand von Mikrowellen, wobei der Bewegungsraum zumindest abschnittsweise einen Hohlleiter zum Leiten der Mikrowellen bildet und wobei die monopolartige Mikrowellen-Antennenanordnung zum Einkoppeln und/oder Auskoppeln von Hohlleiterwellen in den und/oder aus dem Hohlleiter ausgebildet ist und eine Dachkapazitätsfläche umfasst, die von einem zumindest bereichsweise konvex geformten Koppelsondenkörper bestimmt wird. Die Mikrowellen-Antennenanordnung wirkt als Wellentypwandler. Auf der einen Seite liegt eine koaxiale Leitungewelle, auf der anderen Seite eine dem Bewegungsraum zugewandte Holleiterwelle vor.

Aus der DE 10 2006 052 790 A1, der US 2004 0239339 und der WO 2008 055590 ist eine derartige Mikrowellenpositionsmesseinrichtung bekannt. Bei der bekannten Mikrowellenpositionemesseinrichtung wird die Mikrowellen-Antennenanordnung durch einen dielektrischen Antennenkörper gebildet, der zwei elektrisch voneinander isolierte, einen Koaxialleiterabschnitt bildende Antennenflächen aufweist. Die Antennenflächen sind jeweils becherförmig in der Art eines Zylindermantels ausgebildet. Zwischen den Antennenflächen ist ein hülsenförmiger Isolierkörper angeordnet, dessen ringförmige Stirnseite dem Bewegungsraum zugewandt ist.

Die bekannte Mikrowellen-Antennenanordnung erfordert einen hohen Aufwand hinsichtlich der Führung der Luftkanäle und des benötigten Montageaufwands, was sich nachteilig auf die Herstellungskosten für die Mikrowellenpositionsmesseinrichtung auswirkt.

Die Aufgabe der Erfindung besteht darin, eine Mikrowellenpositionsmesseinrichtung bereitzustellen, die einfach aufgebaut und kostengünstig herzustellen ist.

Die Aufgabe der Erfindung wird mit einer Mikrowellenpoaitionsmesseinrichtung gemäß Anspruch 1 gelöst. Bei der bekannten Mikrowellen-Antennenanordnung umfassen die Antennenflächen jeweils Flächenabschnitte, die orthogonal oder parallel zur Bewegungsachse des, insbesondere linearbeweglichen, Messobjekts ausgerichtet sind. Erfindungsgemäß ist vorgesehen, dass Flächenabschnitte der Dachkapazitätsflächen jeweils einen von 0 Grad und von 90 Grad abweichenden, spitzen Winkel mit der Bewegungsachse einnehmen, wobei die einzelnen Flächenabschnitte gleiche oder unterschiedliche spitze Winkel mit der Bewegungsachse einnehmen können. Dadurch wird eine breitbandigere Aus- und Einkopplung der Hohlleiterwellen, bei denen es sich um elektromagnetische Wellen handelt, aus der bzw. in die Mikrowellen-Antennenanordnung erreicht. Somit können mechanische Anforderungen an den Köppelsondenkörper, insbesondere im Hinblick auf Form- und Lagetoleranzen, großzügiger ausgelegt werden, was die Herstellung und Montage des Koppelsondenkörpers vereinfacht und kostengünstiger macht.

Vorteilhaft ist es, wenn Flächenabschnitte der Dachkapazitätsfläche Winkel mit der Bewegungsachse einschließen, die in einem Intervall zwischen 5 Grad und 85 Grad enthalten sind. Dadurch wird eine vorteilhafte Abstrahl- und Einkopplungscharakteristik für die Mikrowellen-Antennenanordnung gewährleistet.

In einer Ausgestaltung der Erfindung ist es vorgesehen, dass die Dachkapazitätsfläche des Koppelsondenkörpers rotationssymmetrisch, insbesondere mit einer parallel oder koaxial zur Bewegungsachse angeordneten Rotationssymmetrieachse, ausgebildet ist. Durch eine rotationssymmetrische Gestaltung der Dachkapazitätsfläche kann eine besonders homogene Aus- und Einkopplung von Hohlleiterwellen im hier bevorzugt zum Einsatz kommenden E01-Mode aus dem bzw. in den Koppelsondenkörper gewährleistet werden. Zudem kann die Herstellung einer rotationssymmetrischen Dachkapazitätsfläche am Koppelsondenkörper mit üblichen, in präziser Weise durchführbaren Herstellungsverfahren, insbesondere Drehverfahren, erfolgen. Besonders bevorzugt ist der gesamte Roppelsondenkörper rotationssymmetrisch ausgeführt.

Bei einer Ausgestaltung der Erfindung ist vorgesehen, dass die Dachkapazitätsfläche als Kegelmantelabschnitt oder als Paraboloidmantelabschnitt ausgebildet ist. Durch die zum Schnittpunkt der Mantellinien des Kegels oder zum Scheitelpunkt des Paraboloids hin verjüngte Gestalt der Dachkapazitätsfläche wird eine kapazitive Belastung des Speisepunktes am Koppelsondenkörper bei der Aus- und Einkopplung der elektromagnetischen Wellen im Vergleich zu dem aus dem Stand der Technik bekannten Koppelsondenkörper reduziert. Dadurch ermöglicht der erfindungsgemäBe Koppelsondenkörper die effiziente Aus- und. Einkopplung von elektromagnetischen Wellen mit einer vergrößerten Frequenzbandbreite, wodurch die Anpassung der Mikrowellen-Antennenanordnung im Hinblick auf deren Eingangsimpedanz vereinfacht wird.

In weiterer Ausgestaltung der Erfindung ist vorgesehen, dass die Dachkapazitätsfläche in einem radial außenliegenden Bereich eine, vorzugsweise umlaufende, Krümmung aufweist. Die Krümmung kann beispielsweise als rotationssymmetrische Verrundung ausgebildet sein, deren zugehörige Rotationssymmetrieachse parallel oder koaxial zur Bewegungsachse angeordnet ist. Die Krümmung ist vorzugsweise konvex ausgebildet. Durch eine Verrundung von Kanten am äußeren Umfang des Koppelsondenkörpers werden lokale Feldstärkespitzen vermieden, die sich insbesondere bei Inhomogenitäten in der Materialverteilung des Antennenkörpers nachteilig auf die Messgenauigkeit der Mikrowellenpositionsmesseinrichtung auswirken können.

Vorteilhaft ist es, wenn der Bewegungsraum von einem Zylindergehäuse begrenzt wird, das einen, insbesondere mit kreisförmigem Querschnitt ausgebildeten, Zylinderraum aufweist, in den das Messobjekt und der Koppelsondenkörper aufgenommen sind. Das Zylindergehäuse dient dabei neben seiner Funktion als Begrenzung des Bewegungsraums vorzugsweise als Schutzhülle für den Koppelsondenkörper und gegebenenfalls als Führung für das, insbesondere als fluidisch angetriebener Kolben ausgebildete, Messobjekt. Vorzugsweise umfasst das Messobjekt einen linearbeweglichen, abdichtend an einer Innenfläche des Zylinderraums anliegenden Kolben, der mit einer aus dem Zylindergehäuse herausragenden Kolbenstange verbunden ist. Der Kolben begrenzt mit dem Zylinderraum wenigstens einen fluidischen Arbeitsraum, der mit einem Fluid, insbesondere Druckluft, beaufschlagt werden kann, um eine Linearbewegung des Messobjekts zu bewirken. Bei anderen Ausführungsformen der Erfindung kann das Messobjekt auch als Läufer eines elektrodynamischen Lineardirektantriebs oder als Teil eines elektromechanischen Spindeltriebs ausgeführt sein.

In weiterer Ausgestaltung der Erfindung ist vorgesehen, dass das Messobjekt und das Zylindergehäuse und der Koppelsondenkörper zumindest bereichsweise aus einem elektrisch leitenden Material hergestellt und/oder mit einer elektrisch leitenden Beschichtung versehen sind. Üblicherweise sind das Zylindergehäuse und das, insbesondere als Kolben einer fluidischen Antriebseinrichtung ausgeführt, Messobjekt aus metallischen Werkstoffen hergestellt. Dadurch werden günstige Abstrahl- bzw. Reflexionseigenschaften für die elektromagnetischen Wellen gewährleistet. Der Koppelsondenkörper kann ebenfalls aus einem metallischen Material hergestellt werden. Alternativ kann wenigstens eine Komponente aus der Gruppe Zylindergehäuse, Messobjekt und Koppelsondenkörper aus einem elektrisch nicht leitenden Material, insbesondere einem Kunststoffmaterial oder einem Keramikmaterial, hergestellt sein. Für diesen Fall wird die jeweilige Komponente zur Gewährleistung einer vorteilhaften Aus- und Einkopplung der elektromagnetischen Wellen mit einer metallischen Beschichtung versehen. Die metallische Beschichtung kann insbesondere durch Abscheidung von Metallpartikeln aus einer flüssigen oder gasförmigen Phase auf die Oberfläche des Koppelsondenkörpers aufgebracht werden (Galvanisierung; CVD - Chemical Vapor Deposition; PVD - Physical Vapor Deposition). Vorzugsweise ist die gesamte Oberfläche der jeweiligen Komponente mit der metallischen Beschichtung versehen, beim Messobjekt, das heißt beispielsweise beim Kolben, genügt es, wenn ein großer Teil der Oberfläche metallisch beschichtet ist.

In weiterer Ausgestaltung der Erfindung ist vorgesehen, dass zwischen einer Stirnfläche des Zylindergehäuses und dem Koppelsondenkörper ein Distanzelement angeordnet ist, das eine vorgebbare Beabstandung zwischen Zylindergehäuse und Koppelsondenkörper gewährleistet und als Dielektrikum ausgebildet ist. Neben seiner Aufgabe als Isolationselement zwischen Zylindergehäuse und Koppelsondenkörper dient das Distanzelement einer, insbesondere zentrischen, Festlegung des Koppelsondenkörpers am Zylindergehäuse.

Vorzugsweise weist der Koppelsondenkörper eine parallel oder koaxial zur Bewegungsachse ausgerichtete Ausnehmung, insbesondere eine Durchgangsbohrung, zur Aufnahme eines Innenleiters auf, der mit einer Hochfrequenzschaltung verbunden ist. Der Innenleiter ist als, vorzugsweise geradliniger, elektrischer Leiter ausgebildet und ist elektrisch mit der Hochfrequenzschaltung, die vorzugsweise auf einer Leiterplatte aufgebaut ist, verbunden. Die Funktion des Innenleiters besteht in der Übertragung der von der Hochfrequenzschaltung bereitgestellten Mikrowellen und/oder in der Übertragung von in die Mikrowellen-Antennenanordnung eingekoppelten Hohlleiterwellen an eine, vorzugsweise in der Hochfrequenzschaltung integrierte, Auswerteeinrichtung. Die Ausnehmung im Koppelsondenkörper ermöglicht eine einfache, toleranzunkritiscrie Montage des Koppelsondenkörpers an den Innenleiter. Zum Aus- und/oder Einkoppeln von Mikrowellen bzw. Hohlleiterwellen aus dem bzw. in den Innenleiter ist kein unmittelbarer elektrischer Kontakt zwischen Innenleiter und Koppelsondenkörper erforderlich. Vielmehr ist eine kapazitive oder gemischt kapazitiv-induktive Kopplung für die Übertragung der hochfrequenten elektromagnetischen Wellen ausreichend.

Vorzugsweise durchsetzt der Innenleiter die Stirnfläche des Zylindergehäuses und ist, insbesondere durch einen Fortsatz des Distanzelements, elektrisch isoliert am Zylindergehäuse aufgenommen. Dies ermöglicht die Anbringung der Hochfrequenzschaltung in einem an den Bewegungsraum angrenzenden, jedoch von diesem durch die Stirnfläche des Zylindergehäuses abgeschotteten Bereich des Zylindergehäuses. Dadurch wird eine effektive Abschirmung von Mikrowellen, die in unerwünschter weise aus der Hochfrequenzschaltung in die Umgebung austreten, gewährleistet. Zudem wird durch die Abschottungswirkung des Zylindergehäuses eine vorteilhafte Auftrennung zwischen den zur Bestimmung der Position des beweglichen Messobjekts eingesetzten Mikrowellen bzw. Hohlleiterwellen und den bei der Signalverarbeitung in der Hochfrequenzschaltung oder einer separaten Auswerteeinrichtung auftretenden Signalen erreicht. Dies wirkt sich vorteilhaft auf die Qualität des Messergebnisses aus.

Vorzugsweise ragt der Innenleiter in die im Koppelsondenkörper vorgesehene Ausnehmung in Richtung der Bewegungsachse in einer Länge hinein, die zumindest im Wesentlichen 25 Prozent der Wellenlänge der bereitgestellten Mikrowellen beträgt. Dies ist von Interesse, sofern zwischen Innenleiter und Koppelsondenkörper ein Dielektrikum, insbesondere Luft oder ein anderes dielektrisches Material, angeordnet ist. Durch die erfindungsgemäße, ungefähr 25 Prozent der Wellenlänge betragende Überdeckung zwischen Innenleiter und Koppelsondenkörper längs der Bewegungsachse wird eine besonders effiziente und breitbandige Ein- und/oder Auskopplung von Mikrowellen aus dem Innenleiter in den Koppelsondenkörper und/oder umgekehrt erreicht. Die Wellenlänge der bereitgestellten elektromagnetischen Wellen bestimmt sich insbesondere aus der Frequenz, die die von der Hochfrequenzschaltung erzeugten Ströme aufweisen. Ein typischer Frequenzbereich für Mikrowellen liegt zwischen 1 GHz und 25 GHz. Die genaue Frequenz ergibt sich aus der Querschnittsausdehnung des Zylindergehäuses.

In weiterer Ausgestaltung der Erfindung ist zwischen Innenleiter und Koppelsondenkörper ein, insbesondere als Fortsatz des Distanzelements ausgebildetes, Dielektrikum angeordnet. Durch Vermeidung eines unmittelbaren, insbesondere elektrisch leitenden, Kontakts zwischen Koppelsondenkörper und Innenleiter können mechanische Toleranzen für den Koppelsondenkörper und die darin vorgesehene Ausnehmung zur Aufnahme des Innenleiters sowie für den Innenleiter relativ grob gewählt werden, was eine kostengünstige Herstellung dieser Bauteile begünstigt. Vorteilhaft ist es, wenn ein, vorzugsweise zylinderhülsenabschnittsförmiger Fortsatz, des Distanzelements als Dielektrikum ausgebildet und zwischen Innenleiter und Koppelsondenkörper angeordnet ist. Hierdurch wird eine für die Übertragungscharakteristik zwischen Innenleiter und Koppelsondenkörper vorteilhafte Zentrierung des Innenleiter gegenüber dem Koppelsondenkörper bewirkt.

Erfindungsgemäß wird der Koppelsondenkörper von einem in dem Zylinderraum angeordneten Einsatzteil getragen, das als Dielektrikum ausgebildet ist. Das Einsatzteils dient zur Festlegung des Koppelsondenkörpers in dem Zylindergehäuse und stützt sich zumindest bereichsweise an der Innenfläche des Zylinderraums im Zylindergehäuse ab. Um eine möglichst geringe Beeinflussung der Mikrowellen bzw. Hohlleiterwellen durch das Einsatzteil zu gewährleisten, ist dieses aus einem Material hergestellt, durch das die Mikrowellen hindurch treten können, vorzugsweise aus Kunststoff.

Das Einsatzteil ist für eine abdichtende Abtrennung eines den Koppelsondenkörper beinhaltenden Antennenraums vom Bewegungsraum ausgebildet ist. In dem Bewegungsraum findet die, die vorzugsweise lineare, Bewegung des Messobjekts längs der Bewegungsachse statt. Dabei kann es bedingt durch Reibungseffekte zwischen Messobjekt und Zylinderraum sowie durch den Einsatz von Schmiermitteln zur Bildung und Anhäufung von Partikeln kommen, die einen negativen Einfluss auf die Genauigkeit der Mikrowellenpositionsmesseinrichtung haben können. Um auch langfristig eine ordnungsgemäße Funktion der Mikrowellenpositionsmesseinrichtung sicherzustellen, ist das Einsatzteil derart ausgebildet, dass es vom Bewegungsraum einen Antennenraum abtrennt. In dem Antennenraum ist der Koppelsondenkörper enthalten, an dem üblicherweise die höchste Feldstärken der aus- und einzukoppelnden elektromagnetischen Wellen auftreten. Verschmutzungen können zu einer Beeinträchtigung der Aus- bzw. Einkopplungseigenschaften des Koppelsondenkörpers führen. Derartige Beeinträchtigungen werden durch die abgekapselte Aufnahme des Koppelsondenkörpers im Antennenraum deutlich verringert. Bei einem als Kolben eines fluidischen Linearantriebs ausgebildeten Messobjekt wird durch die Abtrennungsfunktion des Einsatzteils gewährleistet, dass das druckbeaufschlagte Fluid oder im Fluid enthaltene Stoffe nicht in Kontakt mit dem Koppelsondenkörper treten.

Bei einer Ausgestaltung der Erfindung ist vorgesehen, dass der Koppelsondenkörper, das Einsatzteil und das Zylindergehäuse derart ausgebildet sind, dass der Antennenraum im Wesentlichen gasgefüllt ist. Dadurch lässt sich die Frequenzbandbreite für die Aus- und Einkopplung von Mikrowellen bzw. Hohlleiterwellen verbessern. Vorzugsweise weist der Koppelsondenkörper in einer die Bewegungsachse enthaltenden Querschnittsebene einen im Wesentlichen Y-förmigen Querschnitt auf. Die konkav geformte Dachkapazitätsfläche des Koppelsondenkörpers ist dem Bewegungsraum entgegengesetzt. Vorzugsweise ist ein Raumvolumen zwischen dem Koppelsondenkörper und einer dem Bewegungsraum zugewandten Stirnfläche des Zylindergehäuses gasgefüllt, wodurch auch Maßtoleranzen ausgeglichen werden können. Durch eine Gasfüllung in dem Raumvolumen zwischen der vom Bewegungsraum abgewandten Dachkapazitätsfläche und der dem Bewegungsraum zugewandten Stirnfläche des Zylindergehäuses wird eine kapazitive Belastung des Antennenfußpunkts verringert. Dies ist darauf zurückzuführen, dass aufgrund der Gasfüllung die kapazitive Kopplung zwischen Dachkapazitätsfläche und Stirnfläche des Zylindergehäuses geringer ist, als wenn die Dachkapazitätsfläche direkt an der Stirnfläche anliegen würde oder mittels eines Dielektrikums von der Stirnfläche beabstandet wäre. Somit dient die Gasfüllung der möglichst weitestgehenden Hochfrequenz-Entkopplung der als ersten Polfläche dienenden Dachkapazitätsfläche von dem als zweiten Polfläche dienenden Zylindergehäuse.

Erfindungsgemäß ist vorgesehen, dass zwischen Einsatzteil und Koppelsondenkörper ein elastisches Ausgleichselement, insbesondere ein gummielastischer Dichtring, angeordnet ist, das in einer Montageposition des Einsatzteils zur Gewährleistung einer korrekten Positionierung des Koppelsondenkörpers im Zylindergehäuse vorgespannt ist. Das elastische Ausgleichselement dient zum Ausgleich von Toleranzen zwischen Einsatzteil, Zylindergehäuse und Koppelsondenkörper, insbesondere längs der Bewegungsachse. Um einen definierten Bezug zwischen Koppelsondenkörper und Zylindergehäuse zu schaffen, der für die Genauigkeit des Positionsmessverfahrens von großer Bedeutung ist, ist das Ausgleichselement vorzugsweise zwischen Einsatzteil und Koppelsondenkörper angebracht. Zwischen Koppelsondenkörper und der Stirnfläche des Zylindergehäuses ist vorzugsweise das gestaltfeste Distanzelement angeordnet, das eine eindeutige Zuordnung zwischen Koppelsondenkörper und Zylindergehäuse gewährleistet.

Bei einer vorteilhaften Ausführungsform der Erfindung ist vorgesehen, dass das Einsatzteil einen zwischen Koppelsondenkörper und Bewegungsraum angeordneten, an die konkave Gestalt des Koppelsondenkörpers angepassten Abschnitt aufweist. Damit wird der vom Zylindergehäuse begrenzte Bewegungsraum vorteilhaft ausgenutzt. Dies ist insbesondere bei einer Ausgestaltung des Messobjekts als Kolben eines fluidischen Linearantriebs von Vorteil, da hier oftmals an einem dem Einsatzteil zugewandten Endbereich des Kolbens eine zentrische Befestigungseinrichtung angeordnet ist, die in den vom Einsatzteil berandeten Freiraum eintauchen kann.

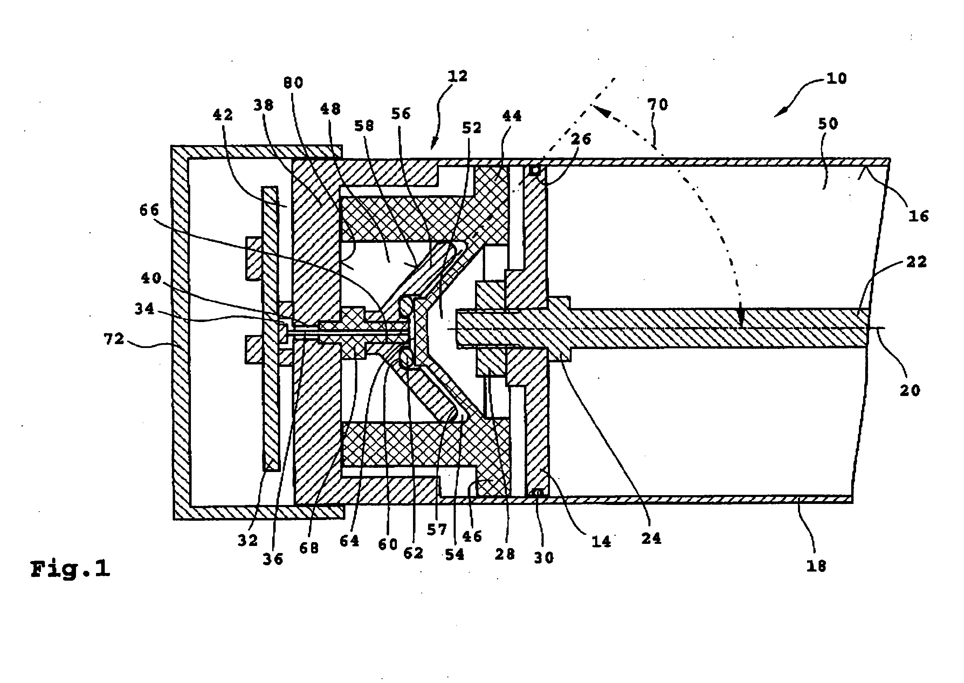

Eine vorteilhafte Ausführungsform der Erfindung ist in der Zeichnung dargestellt.

In der einzigen Figur ist ein schematischer Längsschnitt einer Linearantriebseinrichtung dargestellt, die mit einer erfindungsgemäßen Mikrowellenpositionsmesseinrichtung ausgerüstet ist.

Die in der einzigen Figur dargestellte Linearantriebseinrichtung 10 ist exemplarisch als fluidischer Linearantrieb ausgebildet und umfasst eine Mikrowellenpositionsmesseinrichtung 12 zur Ermittlung der Lage eines als Messobjekt dienenden Fluidkolbens 14. Der Fluidkolben 14 ist schiebebeweglich abdichtend in einem Zylinderraum 16 eines Zylindergehäuses 18 aufgenommen und längs einer Bewegungsachse 20 verstellbar. Der Fluidkolben 14 ist mit einer Kolbenstange 22 gekoppelt, die sich in Richtung der als Mittellängsachse des Zylindergehäuses 18 ausgebildeten Bewegungsachse 20 erstreckt . Die Kolbenstange 22 ragt in einem nicht dargestellten Abschnitt des Zylindergehäuses 18 aus diesem heraus und ist zur Ankopplung an ein nicht dargestelltes Maschinenelement vorgesehen, das mit Hilfe der Linearantriebseinrichtung 10 bewegt werden soll.

Auf der Kolbenstange 22 ist ein Anschlagbund 24 angeordnet, der eine kreisringartige Anlagefläche für den Kolben 14 bereitstellt. Der Kolben 14 wird von einer Befestigungsmutter 28, die auf die Kolbenstange 22 aufgeschraubt ist, gegen den Anschlagbund 24 gepresst. Der vorzugsweise rotationssymmetrisch zur Bewegungsachse 20 ausgebildete Kolben 14 weist exemplarisch an einem radial außen liegenden Bereich eine zirkular umlaufende Nut 26 auf. In der Nut 26 ist ein Dichtring 30 angeordnet, der bei der vorliegenden Ausführungsform eine Abdichtung zwischen dem Nutgrund der Nut 26 des Kolbens 14 und des Zylinderraums 16 gewährleistet. Der Kolben 14 begrenzt mit dem Zylinderraum 16 und einer nicht dargestellten, stirnseitig am Zylindergehäuse 18 angebrachten Abdeckplatte, die von der Kolbenstange 22 abdichtend durchsetzt wird, einen abgeschlossenen Arbeitsraum. In den Arbeitsraum kann über einen nicht dargestellten Anschlussstutzen ein druckbeaufschlagtes Fluid eingeleitet werden, um eine lineare Bewegung des Kolbens 14 und der damit gekoppelten Kolbenstange 22 längs der Bewegungsachse 20 hervorzurufen.

Die Mikrowellenpositionsmesseinrichtung 12 umfasst eine auf einer Ansteuerplatine ausgebildete Hochfrequenzschaltung 32, die von einer nicht näher dargestellten Energiequelle gespeist wird und die an einem Anschlusspunkt 34 für den Innenleiter 36 ein hochfrequentes elektrisches Signal bereitstellt. Ein vorzugsweise stabförmig ausgebildeter Innenleiter 36 ist elektrisch mit dem Anschlusspunkt 34 verbunden und durchsetzt eine Stirnwand 38 des Zylindergehäuses 18, die zu diesem Zweck mit einer Ausnehmung 40 versehen ist, so dass der Innenleiter 36 in den Zylinderraum 16 hineinragt. Die Hochfrequenzschaltung 32 weist eine weitere, als Massefläche ausgebildete Kontaktfläche 42 auf, die den Anschlusspunkt 34 unmittelbar benachbart ringförmig umgreift und die elektrisch mit dem aus metallischem Material hergestellten Zylindergehäuse 18 verbunden ist. Die Ausnehmung 40 im Zylindergehäuse 18 und der Innenleiter 36 bilden also eine koaxiale Durchführung, wobei die Ausnehmung 40 den Außenleiter der Koaxialleitung bildet und mit dem Massepotential der Hochfrequenzschaltung 32 elektrisch verbunden ist.

In dem Zylinderraum 16 ist in einem der Hochfrequenxschaltung 32 benachbarten Endbereich des Zylindergehäuses 18 ein, vorzugsweise aus Kunststoff hergestelltes, Einsatzteil 44 angeordnet, das mit Hilfe von nicht dargestellten Befestigungsmitteln an eine innenseitige Stirnfläche der Stirnwand 38 des Zylindergehäuses 18 angepresst wird. Das Einsatzteil 44 weist eine dem Kolben 14 zugewandte, geschlossene Oberfläche mit einem zirkular umlaufenden Bund 46 auf. Der Bund 46 liegt flächig an dem Zylinderraum 16 an, so dass das Einsatzteil 44 einen Antennenraum 48 von einem Bewegungsraum 50, in dem sich der Fluidkolben 14 bewegt, abtrennt.

Das Einsatzteil 44 ist rotationssymmetrisch zu der Bewegungsachse 20 ausgebildet und weist eine sich in Richtung des Bewegungsraums 50 erweiternde, abschnittsweise konkave, insbesondere kegelabschnittsförmige, Vertiefung 52 auf. Die Vertiefung 52 ermöglicht ein bereichsweises Eintauchen des mit der Befestigungsmutter 28 versehenen Endbereichs der Kolbenstange 22 in das Einsatzteil 44. An einer Rückseite der Vertiefung 52 ist am Einsatzteil 44 eine Ausnehmung 54 ausgebildet, in der ein der Mikrowellenpositionsmesseinrichtung 12 zugehöriger Koppelsondenkörper 56 zentrisch zur Bewegungsachse 20 angebracht ist.

Der Koppelsondenkörper 56 ist bei der vorliegenden Ausführungsform rotationssymmetrisch zur Bewegungsachse 20 ausgeführt und weist in einer der Darstellungsebene der einzigen Figur entsprechenden Schnittebene eine Y-förmige Gestalt auf. Eine im Wesentlichen kegelmantelabschnittsförmige, dem Bewegungsraum 50 abgewandte Oberfläche des monopolartigen Koppelsondenkörpers 56 dient als Dachkapazitätsfläche 58 für die Aus- und Einkopplung von Hohlleiterwellen. In einem radial außenliegenden Bereich ist der Koppelsondenkörper 56 mit einer Verrundung 57 versehen, wie dies in der Querschnittsdarstellung der einzigen Figur gut sichtbar ist. Der Radius der Verrundung 57 entspricht der halben Wandstärke zwischen der Dachkapazitätsfläche 58 und der Vorderseite. Die Verrundung ist somit als jeweils tangentialer Übergang zwischen der kegelmantelabschnittsförmigen Dachkapazitätsfläche 58 und der konkaven, dem Bewegungsraum 50 zugewandten, ebenfalls kegelmantelabschnittsförmigen Vorderseite des Koppelsondenkörpers 56 ausgebildet. Durch diese verrundung werden lokale Feldstärkespitzen am äußeren Umfangsrand der Dachkapazitätsfläche 58 vermieden, die die Ausbreitung der Hohlleiterwellen in Richtung des Bewegungsraums 50 und der in Rückwärtsrichtung verlaufenden, vom Kolben 14 reflektierten Hohlleiterwellen beeinträchtigen könnten.

In die Vorderseite des Koppelsondenkörpers 56 ist an einem radial innenliegenden Bereich eine kreisringförmige Nut 60 eingebracht, in der ein als 0-Ring ausgeführtes gummielastisches Ausgleichselement 62 angeordnet ist. Das Ausgleichselement 62 liegt an einer dem Koppelsondenkörper 56 zugewandten Planfläche 64 des Einsatzteils 44 abdichtend an. Ein Toleranzausgleich zwischen Einsatzteil 44 und Koppelsondenkörper 56 längs der Bewegungsachse 20 wird durch das Ausgleichselement 62 gewährleistet. Der Koppelsondenkörper 56 ist von einer parallel zur Bewegungsachse 20 erstreckten Durchgangsbohrung 66 durchsetzt, in die der Innenleiter 36 hineinragt. Eine Überdeckung zwischen Innenleiter 36 und Koppelsondenkörper 56 längs der Bewegungsachse 20 ist derart gewählt, dass der Innenleiter 36 um einen Betrag von etwa 25 Prozent der Wellenlänge der von der Hochfrequenzschaltung 32 abgegebenen elektromagnetischen Wellen in die Durchgangsbohrung 66 hineinragt. Dadurch wird eine für die effiziente Übertragung von elektromagnetischen Wellen zwischen Innenleiter 36 und Koppelsondenkörper 56 vorteilhafte kapazitive oder gemischt kapazitiv-induktive Kopplung gewährleistet. -

Für eine exakte Positionierung des Koppelsondenkörpers 56 gegenüber der Stirnwand 38 des Zylindergehäuses 18 ist ein rotationssymmetrisch ausgebildetes Distanzelement 68 vorgesehen, das mit nicht näher bezeichneten Zylinderhülsenabschnitten sowohl in die Durchgangsbohrung 66 als auch in die Ausnehmung 40 der Stirnwand 38 hineinragt. Das Distanzelement 68 stellt durch den Eingriff in die Ausnehmung 40 und die Durchgangsbohrung 66 die zentrische Anordnung des Koppelsondenkörpers 56 im Zylindergehäuse 18 sicher und dient ebenfalls zur Zentrierung und Isolierung des Innenleiters 36 gegenüber dem Koppelsondenkörper 56. Dadurch wird eine homogene Ein- und Auskopplung von Mikrowellen aus dem bzw. in den Innenleiter 36 zum Koppelsondenkörper 56 und in umgekehrter Richtung gewährleistet.

Die kegelmantelabschnittsförmige Dachkapazitätsfläche 58 des Koppelsondenkörpers 56 schließt mit der Bewegungsachse 20 einen Winkel 70 ein, der exemplarisch ungefähr 50 Grad beträgt. Durch die sich in Richtung des Bewegungsraums 50 konisch erweiternde Gestaltung des Koppelsondenkörpers 56 wird ein homogener Übergang der aus dem Innenleiter 36 ausgekoppelten Mikrowellen in den Bewegungsraum 50 gewährleistet. Dadurch kann sich im Bewegungsraum 50 eine hinreichend modenreine Hohlleiterwelle ausbilden, die für die Erzielung eines exakten Messergebnisses zur Positionsbestimmung der Lage des Fluidkolbens 14 in vorteilhafter Weise geeignet ist.

Die Hochfrequenzschaltung 32 ist bei dem dargestellten Ausführungsbeispiel endseitig am Zylindergehäuse 18 angebracht und wird von einer metallischen Abdeckkappe 72 umschlossen, die ein Austreten von Mikrowellenstrahlung in die Umgebung verhindert.

Die von der Hochfrequenzschaltung 32 erzeugten elektromagnetischen Wellen werden von dem monopolartigen Innenleiter 36 nach Passieren der Ausnehmung 40 in den luftgefüllten Antennenraum 48 abgestrahlt, wobei die jeweils zugehörigen Feldlinien zwischen dem Innenleiter 36 bzw. der Dachkapazitätsfläche 58 und dem Zylindergehäuse 18 verlaufen. Die Feldlinien wandern aufgrund der Feldausbreitung in radialer Richtung nach außen aus und bilden die Hohlleiterwelle, die sich in Richtung des Kolbens 14 ausbreitet. Durch die konusabschnittsförmige Geometrie der Dachkapazitätsfläche 58 und deren Abrundung am radial äußeren Rand werden Feldstärkespitzen vermieden. Durch die axiale Beabstandung der Dachkapazitätsfläche 58 von der dem Bewegungsraum 50 zugewandten Stirnfläche 80 des Zylindergehäuses 18 und den dadurch vorhandenen gasgefüllten Abschnitt des Antennenraum 48 wird aus hochfrequenztechnischer Sicht eine weitgehende kapazitive Entkopplung der als erste Polfläche dienenden Dachkapazitätsfläche 58 von der als zweite Polfläche dienenden Stirnfläche 80 gewährleistet. Hierdurch wird der Wirkungsgrad der durch den Koppelsondenkörper 56 und das Zylindergehäuse 18 bestimmten Antenneneinrichtung positiv beeinflusst.

Bei einer nicht dargestellten Ausführungsform der Erfindung ist die Hochfrequenzschaltung unmittelbar hinter dem Koppelsondenkörper im Zylindergehäuse angeordnet, wodurch sich eine besonders kompakte Anordnung erreichen lässt.

Bei einer weiteren, ebenfalls nicht dargestellten Ausführungsform der Erfindung ist die Hochfrequenzschaltung abseits des Zylindergehäuses angeordnet und die erzeugten Mikrowellen sowie die zur Erfassung der Position des Fluidkolbens in Rückwärtsrichtung laufenden elektromagnetischen Wellen werden in einem geeigneten Wellenleiter, insbesondere einem Koaxialkabel, zwischen Hochfrequenzschaltung und Koppelsondenkörper übertragen.

## Patentansprüche

1. Mikrowellenpositionsmesseinrichtung mit einer Mikrowellen-Antennenanordnung zur Bestimmung einer Position eines in einem Bewegungsraum (50) längs einer Bewegungsachse (20) beweglichen Messobjekts (14) anhand von Mikrowellen, wobei der Bewegungsraum (50) zumindest abschnittsweise einen Hohlleiter zum Leiten der Mikrowellen bildet und wobei die Mikrowellen-Antennenanordnung zum Einkoppeln und/oder Auskoppeln von Hohlleiterwellen in den und/oder aus dem Hohlleiter ausgebildet ist und eine Dachkapazitätsfläche (58) aufweist, die an einem zumindest bereichsweise konkav geformten, in Richtung des Bewegungsraums (50) konisch erweiterten Koppelsondenkörper (56) ausgebildet ist, wobei die Dachkapazitätsfläche (58) zumindest im Wesentlichen aus Flächenabschnitten gebildet ist, die mit der Bewegungsachse (20) spitze Winkel (70) einschließen, wobei der Koppelsondenkörper (56) von einem in dem Zylinderraum (16) angeordneten Einsatzteil (44) getragen wird, **dadurch gekennzeichnet, dass** das Einsatzteil (44) als Dielektrikum für eine abdichtende Abtrennung eines den Koppelsondenkörper (56) enthaltenden Antennenraums (48) vom Bewegungsraum (50) ausgebildet ist und dass zwischen dem Einsatzteil (44) und dem Koppelsondenkörper (56) ein elastisches Ausgleichselement (62) angeordnet ist, das in einer Montageposition des Einsatzteils (44) zur Gewährleistung einer korrekten Positionierung des Koppelsondenkörpers (56) im Zylindergehäuse (18) elastisch vorgespannt ist.

2. Mikrowellenpositionsmesseinrichtung nach Anspruch 1, **dadurch gekennzeichnet, dass** Flächenabschnitte der Dachkapazitätsfläche (58) Winkel (70) mit der Bewegungsachse (20) einschließen, die in einem Intervall zwischen 5 Grad und 85 Grad enthalten sind.

3. Mikrowellenpositionsmesseinrichtung nach Anspruch 1 oder 2, **dadurch gekennzeichnet, dass** die Dachkapazitätsfläche (58) des Koppelsondenkörpers (56) rotationssymmetrisch, insbesondere mit einer parallel oder koaxial zur Bewegungsachse (20) angeordneten Rotationssymmetrieachse, ausgebildet ist.

4. Mikrowellenpositionsmesseinrichtung nach Anspruch 3, **dadurch gekennzeichnet, dass** die Dachkapazitätsfläche (58) als Kegelmantelabschnitt oder als Paraboloidmantelabschnitt ausgebildet ist.

5. Mikrowellenpositionsmesseinrichtung nach Anspruch 3 oder 4, **dadurch gekennzeichnet, dass** die Dachkapazitätsfläche (58) in einem radial außenliegenden Bereich eine, vorzugsweise umlaufende, Krümmung (57) aufweist.

6. Mikrowellenpositionsmesseinrichtung nach einem der vorhergehenden Ansprüche, **dadurch gekennzeichnet, dass** der Bewegungsraum (50) von einem Zylindergehäuse (18) begrenzt wird, das einen, insbesondere mit kreisförmigem Querschnitt ausgebildeten, Zylinderraum (16) aufweist, in den das Messobjekt (14) und der Koppelsondenkörper (56) aufgenommen sind.

7. Mikrowellenpositionsmesseinrichtung nach Anspruch 6, **dadurch gekennzeichnet, dass** das Messobjekt (14) und das zylindergehäuse (18) und der Koppelsondenkörper (56) zumindest bereichsweise aus einem elektrisch leitenden Material hergestellt und/oder mit einer elektrisch leitenden Beschichtung versehen sind.

8. Mikrowellenpositionsmesseinrichtung nach Anspruch 5, 6 oder 7, **dadurch gekennzeichnet, dass** zwischen einer Stirnfläche (38) des Zylindergehäuses (18) und dem Koppelsondenkörper (56) ein Distanzelement (68) angeordnet ist, das eine vorgebbare Beabstandung zwischen Zylindergehäuse (18) und Koppelsondenkörper (56) gewährleistet und das als Dielektrikum ausgebildet ist.

9. Mikrowellenpositionsmesseinrichtung nach einem der vorhergehenden Ansprüche, **dadurch gekennzeichnet, dass** der Koppelsondenkörper (56) eine parallel oder koaxial zur Bewegungsachse (20) ausgerichtete Ausnehmung (66), insbesondere eine Durchgangsbohrung, zur Aufnahme eines Innenleiters (36) aufweist, der mit einer Hochfrequenzschaltung (32) verbunden ist.

10. Mikrowellenpositionsmesseinrichtung nach Anspruch 9, **dadurch gekennzeichnet, dass** der Innenleiter (36) die Stirnfläche (38) des Zylindergehäuses (18) durchsetzt und, insbesondere durch einen Fortsatz des Distanzelements (68), elektrisch isoliert am Zylindergehäuse (18) aufgenommen ist.

11. Mikrowellenpositionsmesseinrichtung nach Anspruch 9 oder 10, **dadurch gekennzeichnet, dass** der Innenleiter (36) in die im Koppelsondenkörper (56) vorgesehene Ausnehmung (66) in Richtung der Bewegungsachse (20) in einer Länge hineinragt, die zumindest im Wesentlichen 25 Prozent der Wellenlänge der bereitgestellten Mikrowellen beträgt.

12. Mikrowellenpositionsmesseinrichtung nach Anspruch 9, 10 oder 11, **dadurch gekennzeichnet, dass** zwischen Innenleiter (36) und Koppelsondenkörper (56) ein, insbesondere als Fortsatz des Distanzelements (68) ausgebildetes, Dielektrikum angeordnet ist.

13. Mikrowellenpositionsmesseinrichtung nach Anspruch 1, **dadurch gekennzeichnet, dass** der Koppelsondenkörper (56), das Einsatzteil (44) und das Zylindergehäuse (18) derart ausgebildet sind, dass der Antennenraum (48) im Wesentlichen gasgefüllt ist und/oder das Einsatzteil (44) einen zwischen Koppelsondenkörper (56) und Bewegungsraum (50) angeordneten, an die konkave Gestalt des Koppelsondenkörpers (56) angepassten Abschnitt aufweist.

14. Mikrowellenpositionsmesseinrichtung nach Anspruch 13, **dadurch gekennzeichnet, dass** das elastische Ausgleichselement (62) als gummielastischer Dichtring ausgebildet ist.

## Claims

1. Microwave position sensing device comprising a microwave aerial arrangement for determining a position of a measuring object (14) movable in a movement space (50) along an axis of motion (20) using microwaves, wherein at least a section of the movement space (50) forms a waveguide for conducting the microwaves and wherein the microwave aerial arrangement is designed for coupling guided waves into and/or out of the waveguide and has a top-loading capacitance surface (58) which is formed on an at least partially concave coupling probe body (56) conically expanding towards the movement space (50), wherein the top-loading capacitance surface (58) is at least substantially represented by surface sections which enclose acute angles (70) with the axis of motion (20), the top-loading capacitance surface (58) being supported by an insert part (44) placed in the cylinder chamber (16), **characterised in that** the insert part (44) is designed as a dielectric for a sealing separation of an aerial chamber (48) containing the coupling probe body (56) from the movement space (50), and **in that** an elastic compensating element (62) which is elastically preloaded to ensure a correct positioning of the coupling probe body (56) in the cylinder housing (18) in an installed position of the insert part (44) is provided between the insert part (44) and the coupling probe body (56).

2. Microwave position sensing device according to claim 1, **characterised in that** the surface sections of the top-loading capacitance surface (58) enclose angles (70) with the axis of motion (20) which are contained in an interval between 5 degrees and 85 degrees.

3. Microwave position sensing device according to claim 1 or 2, **characterised in that** the top-loading capacitance surface (58) of the coupling probe body (56) is designed to be rotationally symmetric, in particular having an axis of rotational symmetry which is parallel to or coaxial with the axis of motion (20).

4. Microwave position sensing device according to claim 3, **characterised in that** the top-loading capacitance surface (58) is designed as a conical surface section or a paraboloid surface section.

5. Microwave position sensing device according to claim 3 or 4, **characterised in that** the top-loading capacitance surface (58) has in a radially outward region an in particular continuous curvature (57).

6. Microwave position sensing device according to any of the preceding claims, **characterised in that** the movement space (50) is bounded by a cylinder housing (18) which has a cylinder chamber (16) having an in particular circular cross-section, in which the measuring object (14) and the coupling probe body (56) are accommodated.

7. Microwave position sensing device according to claim 6, **characterised in that** at least parts of the measuring object (14), the cylinder housing (18) and the coupling probe body (56) are made of an electrically conducting material and/or provided with an electrically conducting coating.

8. Microwave position sensing device according to claim 5, 6 or 7, **characterised in that** a spacer element (68) which ensures a presettable distance between the cylinder housing (18) and the coupling probe body (56) and which is designed as a dielectric is provided between an end face (38) of the cylinder housing (18) and the coupling probe body (56).

9. Microwave position sensing device according to any of the preceding claims, **characterised in that** the coupling probe body (56) comprises a recess (66), in particular a through-hole, oriented parallel to or coaxial with the axis of motion (20) for the accommodation of an internal conductor (36) which is connected to a high-frequency circuit (32).

10. Microwave position sensing device according to claim 9, **characterised in that** the internal conductor (36) passes through the end face (38) of the cylinder housing (18) and is located with electric insulation on the cylinder housing (18), in particular by way of an extension of the spacer element (68).

11. Microwave position sensing device according to claim 9 or 10, **characterised in that** the internal conductor (36) projects into the recess (66) provided in the coupling probe body (56) in the direction of the axis of motion (20) with a length which is at least substantially 25 percent of the wavelength of the microwaves provided.

12. Microwave position sensing device according to claim 9, 10 or 11, **characterised in that** a dielectric which is in particular designed as an extension of the spacer element (68) is provided between the internal conductor (36) and the coupling probe body (56).

13. Microwave position sensing device according to claim 1, **characterised in that** the coupling probe body (56), the insert part (44) and the cylinder housing (18) are designed such that the aerial chamber (48) is substantially filled with gas and/or the insert part (44) has a section which is located between the coupling probe body (56) and the movement space (50) and which is adapted to the concave shape of the coupling probe body (56).

14. Microwave position sensing device according to claim 13, **characterised in that** the elastic compensating element (62) is designed as a rubber-elastic sealing ring.

## Revendications

1. Dispositif de mesure de position de micro-ondes comprenant un ensemble d'antennes à micro-ondes servant à déterminer une position d'un objet de mesure (14) mobile dans un espace de déplacement (50) le long d'un axe de déplacement (20) à l'aide de micro-ondes, sachant que l'espace de déplacement (50) forme au moins par endroits un guide d'ondes servant à guider les micro-ondes et sachant que l'ensemble d'antennes à micro-ondes est réalisé afin d'injecter des ondes de guides d'ondes dans le guide d'ondes et/ou d'extraire ces dernières du guide d'ondes et présente une surface de capacité terminale (58), qui est réalisée au niveau d'un corps de sonde de couplage (56) formé de manière concave au moins par endroits, élargi de manière conique en direction de l'espace de déplacement (50), sachant que la surface de capacité terminale (58) est réalisée au moins essentiellement à partir de sections de surface, qui forment avec l'axe de déplacement (20) des angles aigus (70), sachant que le corps de sonde de couplage (56) est supporté par un insert (44) disposé dans l'espace cylindrique (16), **caractérisé en ce que** l'insert (44) est réalisé sous la forme d'un diélectrique afin de séparer de manière étanche un espace d'antennes (48) contenant le corps de sonde de couplage (56) de l'espace de déplacement (50), et **en ce qu'**est disposé entre l'insert (44) et le corps de sonde de couplage (56) un élément de compensation (62) élastique, qui est précontraint de manière élastique dans une position de montage de l'insert (44) afin de garantir un positionnement correct du corps de sonde de couplage (56) dans le boîtier cylindrique (18).

2. Dispositif de mesure de position de micro-ondes selon la revendication 1, **caractérisé en ce que** les sections de surface de la surface de capacité terminale (58) forment des angles (70) avec l'axe de déplacement (20), lesquels sont compris dans une plage allant de 5 degrés à 85 degrés.

3. Dispositif de mesure de position de micro-ondes selon la revendication 1 ou 2, **caractérisé en ce que** la surface de capacité terminale (58) du corps de sonde de couplage (56) est réalisée de manière symétrique en rotation, en particulier avec un axe de symétrie de rotation disposé de manière parallèle ou de manière coaxiale par rapport à l'axe de déplacement (20).

4. Dispositif de mesure de position de micro-ondes selon la revendication 3, **caractérisé en ce que** la surface de capacité terminale (58) est réalisée sous la forme d'une section d'enveloppe sphérique ou sous la forme d'une section d'enveloppe parabolique.

5. Dispositif de mesure de position de micro-ondes selon la revendication 3 ou 4, **caractérisé en ce que** la surface de capacité terminale (58) présente dans une zone se trouvant radialement à l'extérieur, une courbure (57) de préférence périphérique.

6. Dispositif de mesure de position de micro-ondes selon l'une quelconque des revendications précédentes, **caractérisé en ce que** l'espace de déplacement (50) est délimité par un boîtier cylindrique (18), qui présente un espace cylindrique (16) réalisé en particulier avec une section transversale circulaire, dans lequel sont logés l'objet de mesure (14) et le corps de sonde de couplage (56).

7. Dispositif de mesure de position de micro-ondes selon la revendication 6, **caractérisé en ce que** l'objet de mesure (14) et le boîtier cylindrique (18) et le corps de sonde de couplage (56) sont fabriqués au moins par endroits à partir d'un matériau électriquement conducteur et/ou sont pourvus d'un revêtement électriquement conducteur.

8. Dispositif de mesure de position de micro-ondes selon la revendication 5, 6 ou 7, **caractérisé en ce qu'**est disposé entre une surface frontale (38) du boîtier cylindrique (18) et le corps de sonde de couplage (56) un élément d'écartement (68), qui garantit une distance pouvant être prédéfinie entre le boîtier cylindrique (18) et le corps de sonde de couplage (56) et qui est réalisé sous la forme d'un diélectrique.

9. Dispositif de mesure de position de micro-ondes selon l'une quelconque des revendications précédentes, **caractérisé en ce que** le corps de sonde de couplage (56) présente un évidement (66), en particulier un alésage traversant, orienté de manière parallèle ou de manière coaxiale par rapport à l'axe de déplacement (20) et servant à recevoir un guide interne (36), qui est relié à un circuit haute fréquence (32).

10. Dispositif de mesure de position de micro-ondes selon la revendication 9, **caractérisé en ce que** le guide interne (36) traverse la surface frontale (38) du boîtier cylindrique (18), et est logé de manière isolée électriquement au niveau du boîtier cylindrique (18), en particulier par un prolongement de l'élément écarteur (68).

11. Dispositif de mesure de position de micro-ondes selon la revendication 9 ou 10, **caractérisé en ce que** le guide interne (36) fait saillie dans l'évidement (66) prévu dans le corps de sonde de couplage (56) en direction de l'axe de déplacement (20) selon une longueur qui équivaut au moins essentiellement à 25 % de la longueur d'ondes des micro-ondes fournies.

12. Dispositif de mesure de position de micro-ondes selon la revendication 9, 10 ou 11, **caractérisé en ce qu'**est disposé entre le guide interne (36) et le corps de sonde de couplage (56), un diélectrique réalisé en particulier sous la forme d'un prolongement de l'élément écarteur (68).

13. Dispositif de mesure de position de micro-ondes selon la revendication 1, **caractérisé en ce que** le corps de sonde de couplage (56), l'insert (44) et le boîtier cylindrique (18) sont réalisés de telle manière que l'espace d'antennes (48) est essentiellement rempli de gaz, et/ou **en ce que** l'insert (44) présente une section disposée entre le corps de sonde de couplage (56) et l'espace de déplacement (50), adaptée à la forme concave du corps de sonde de couplage (56).

14. Dispositif de mesure de position de micro-ondes selon la revendication 13, **caractérisé en ce que** l'élément de compensation (62) élastique est réalisé sous la forme d'une bague d'étanchéité élastique.
